# FASCICULE DE BREVET EUROPEEN

(11) **EP 2 417 377 B1**
(45) Date de publication et mention de la délivrance du brevet: **13.12.2017**
(21) Numéro de dépôt: 10714229.1
(22) Date de dépôt: 06.04.2010
(51) Int. Cl.: F16F 7/08

(54) **DISPOSITIF LINEAIRE A FRICTION CONTROLEE AVEC PRESSAGE NORMAL AU DEPLACEMENT**
LINEARVORRICHTUNG MIT GESTEUERTEN REIBUNG, IN DER EINE DRUCKKRAFT SENKRECHT ZUR BEWEGUNG ANGELEGT WIRD
CONTROLLED-FRICTION LINEAR DEVICE IN WHICH A PRESS FORCE IS APPLIED PERPENDICULAR TO THE MOVEMENT

(30) Priorité: 06.04.2009 FR 0901685
(43) Date de publication de la demande: 15.02.2012
(73) Titulaire: Safran Landing Systems, 78140 Vélizy-Villacoublay (FR)
(72) Inventeur: LAFITTE, Arnaud, F-92370 Chaville (FR); VERLYCK, Sabien, F-32550 Auterrive (FR)
(74) Mandataire: Parzy, Benjamin Alain
(86) Numéro de dépôt international: PCT/EP2010/054537
(87) Numéro de publication internationale: WO 2010/115894

(56) Documents cités:
- DE-A1- 2 735 779
- DE-A1-102004 047 999
- US-A- 3 134 462
- US-A- 3 866 720

## Description

L'invention est relative à un dispositif à friction contrôlée.

### ARRIERE-PLAN TECHNOLOGIQUE DE L'INVENTION

Il est connu du document FR2905997 un dispositif à friction contrôlée comportant un premier et un deuxième élément montés mobiles l'un part rapport à l'autre selon une direction de glissement, un organe frotteur étant disposé entre les deux éléments et rappelé vers une position de coincement par un organe presseur pour, dans un sens de déplacement relatif des éléments le long de la direction de déplacement, empêcher le déplacement des deux éléments, et dans l'autre sens de déplacement relatif, exercer sur les deux éléments un effort de friction résistant dépendant d'une contrainte installée sur l'organe de coin par l'organe presseur.

A cet effet, l'organe frotteur comporte une surface de frottement contre l'un des éléments, et une surface d'appui contre l'autre des éléments, ces deux surfaces faisant entre elles un angle.

Ce dispositif a l'inconvénient de ne fonctionner que dans un sens, puisque l'organe frotteur joue le rôle d'un coin empêchant le mouvement relatif dans l'un des sens.

Dans le même document, des dispositifs rotatifs sont illustrés qui fonctionnent eux dans les deux sens de rotation.

### OBJET DE L'INVENTION

L'invention pour objet un dispositif permettant un coulissement relatif des deux éléments dans les deux sens, s'inspirant des solutions adoptées dans les dispositifs rotatifs.

### BREVE DESCRIPTION DE L'INVENTION

En vue de la réalisation de ce but, on propose un dispositif à friction contrôlée, comportant un premier élément sur lequel un deuxième élément est monté pour coulisser selon une direction de coulissement, et des moyens de retenue à friction disposés pour exercer entre les deux éléments un effort résistant s'opposant au déplacement relatif des deux éléments, les moyens de retenue à friction comportant :
- un organe frotteur monté solidaire du premier élément pour frotter sur le deuxième élément selon une surface de frottement s'étendant parallèlement à la direction de coulissement ;
- un organe presseur pour exercer sur l'organe frotteur un effort de poussée de l'organe frotteur contre le deuxième élément selon une direction normale au déplacement relatif des éléments ;
caractérisé en ce que les moyens de retenue comportent des moyens de liaison de l'organe frotteur au premier élément qui provoquent un décollement de l'organe frotteur du deuxième élément lors d'un déplacement dans un sens ou dans l'autre du deuxième élément relativement au premier élément.

Ainsi, la poussée exercée par l'organe presseur contribue à générer entre le deuxième élément et l'organe frotteur un effort résistant qui retient le deuxième élément sur le premier élément. Cependant, si l'effort exercé sur le deuxième élément augmente, celui-ci va entraîner légèrement l'organe frotteur et les moyens de liaison vont progressivement provoquer un décollement de l'organe frotteur, jusqu'à ce que le deuxième élément soit libéré et puisse se mouvoir par rapport au premier élément à l'encontre d'un effort de friction résistant dépendant essentiellement de la poussée exercée par l'organe presseur.

Il est dés lors très simple de rendre le dispositif symétrique. Il suffit que les moyens de liaison provoquent un décollement lorsque le deuxième élément est indifféremment déplacé dans l'un ou l'autre sens relativement au premier élément.

Selon un mode particulier de réalisation de l'invention, la surface de frottement s'étend obliquement par rapport à une direction de poussée de l'organe presseur sur l'organe frotteur. Cette disposition oblique permet une démultiplication de l'effort de poussée exercé par l'organe presseur, augmentant ainsi l'effort résistant.

### BREVE DESCRIPTION DES FIGURES

L'invention sera mieux comprise à la lumière de la description des figures des dessins annexés, parmi lesquelles :
- la figure 1 est une vue de face partiellement écorchée d'un dispositif à friction contrôlée selon un premier mode particulier de réalisation de l'invention ;
- la figure 2 est une vue de dessus du dispositif de la figure 1 ;
- la figure 3 est une vue de face d'un dispositif à friction contrôlée selon un deuxième mode particulier de réalisation de l'invention ;
- la figure 4 est une vue en perspective partiellement écorchée du dispositif de la figure 3 ;
- la figure 5 est une vue de dessus partiellement écorchée d'un troisième mode particulier de réalisation de l'invention ;
- la figure 6 est une vue en perspective du dispositif de la figure 5, sur laquelle le deuxième élément n'a été qu'esquissé en pointillés ;
- la figure 7 est une vue de détail d'un patin frotteur équipant le dispositif illustrés aux figures 5 et 6 ;
- la figure 8 est une vue en coupe d'un dispositif à friction contrôlée selon un quatrième mode particulier de réalisation de l'invention.

### DESCRIPTION DETAILLEE DES FIGURES

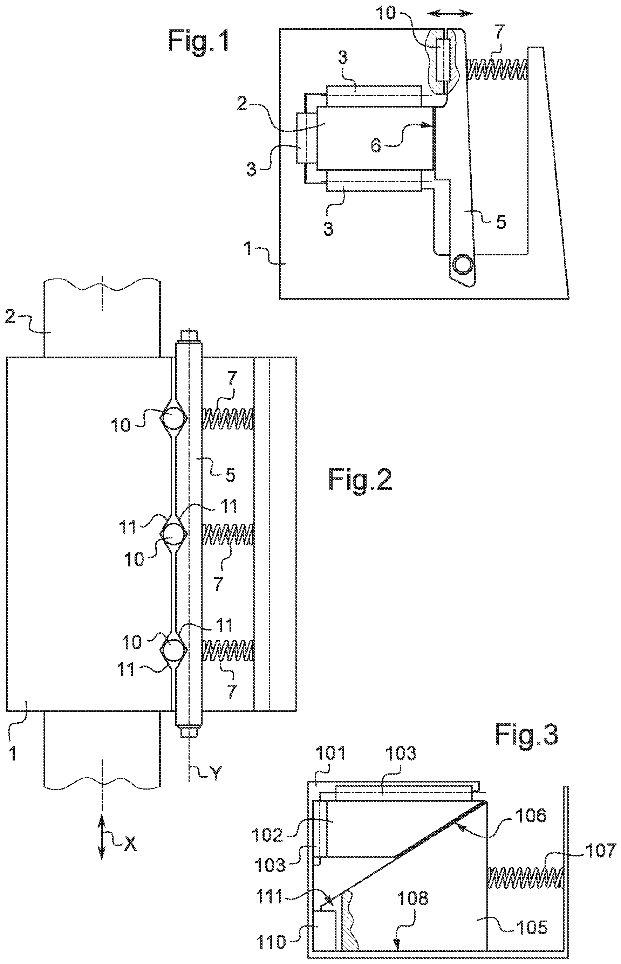

En référence aux figures 1 et 2, et conformément à un premier mode de réalisation, le dispositif comporte un premier élément sous la forme d'un corps 1, dans lequel le deuxième élément, ici un coulisseau 2 est monté pour coulisser selon une direction de coulissement X, vue en bout sur la figure 1. Des rouleaux 3 sont disposés entre le corps 1 et le coulisseau 2 pour faciliter ce coulissement. Le dispositif comporte un organe frotteur sous la forme d'un volet 5 articulé sur le corps 1 autour d'un axe d'articulation Y parallèle à la direction X. L'articulation est agencée pour permettre un -léger-déplacement du volet 5 vis-à-vis du corps 1 parallèlement à son axe d'articulation Y.

Le volet 5 comporte une surface de frottement 6 parallèle à la direction de coulissement et qui est rappelée vers le coulisseau 2 pour frotter contre celui-ci par un organe presseur, comportant ici plusieurs ressorts hélicoïdaux 7 disposés entre le corps 1 et le volet 5.

Enfin, des moyens de liaison sont disposés entre le corps 1 et le volet 5 pour retenir le volet sur le corps 1 tout en provoquant un écartement du volet par rapport au coulisseau 2 à l'encontre de l'effort de poussée générée par les ressorts 7 lors d'un déplacement relatif du volet 5 par rapport au corps 1. Les moyens de liaison comportent à cet effet des rouleaux 10 qui sont disposés dans des cavités formées par des demi-cavités 11 en regard creusées dans le corps 1 et le volet 5, les demi-cavités présentant chacune deux pentes.

Le fonctionnement du dispositif est le suivant. Lorsque l'on tente de déplacer le coulisseau 2 par rapport au corps 1, le coulisseau 2 va se déplacer légèrement en entraînant avec lui le volet 5, jusqu'à ce que les rouleaux 10 viennent en contact avec de demi-pentes opposées des demi-cavités 11. En augmentant encore l'effort exercé sur le coulisseau, les rouleaux 10 vont progressivement forcer le volet 5 à s'écarter du coulisseau 2 à l'encontre de la poussée exercée par les ressorts 7, jusqu'à ce que le volet 5 soit suffisamment écarté pour ne plus pouvoir retenir le coulisseau 2. Celui-ci se déplace alors par rapport au corps 1, à l'encontre d'un effort de friction résistant exercé par le volet 5. L'effort de friction résistant résulte d'un équilibre trouvé par le volet entre l'action des rouleaux 10 tendant à écarter le volet 5 du coulisseau 2 et la poussée des ressorts 7 tendant à plaquer le volet 5 contre le coulisseau 2. Le dispositif fonctionne de cette façon dans les deux sens de déplacement, les pentes des deux cavités 11 provoquant le décollement de l'organe frotteur dans un sens ou dans l'autre.

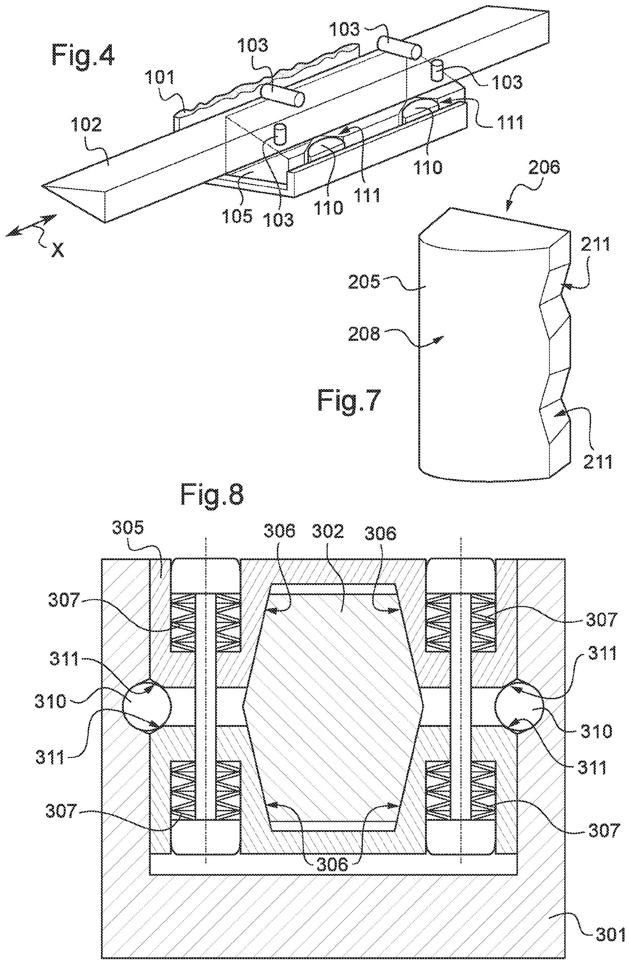

En référence aux figures 3 et 4, et conformément à un deuxième mode particulier de réalisation de l'invention, Le dispositif comporte un premier élément 101 sous la forme d'un corps 1 dans lequel un deuxième élément 102 est monté pour coulisser selon une direction de coulissement X, vue en bout sur la figure 3.

Des rouleaux 103 sont disposés entre le corps 101 et le coulisseau 102 pour faciliter ce coulissement. Le dispositif comporte un organe frotteur sous la forme d'une cale 105. La cale 105 possède une surface de frottement 106 s'étendant parallèlement à la direction de coulissement, et qui est poussée vers le coulisseau 102 par un organe presseur comportant plusieurs ressorts hélicoïdaux 107. La cale 105 comporte par ailleurs une surface d'appui 108 contre le premier élément formant un angle avec la surface de frottement 106. Elle exerce donc un blocage en coin, mais contrairement au dispositif à coulissement illustré dans le document FR2905997, le blocage ne s'exerce plus directement dans la direction de coulissement, mais perpendiculairement à celle-ci.

On notera ici que la surface de frottement est non plus perpendiculaire à la direction de la poussée de l'organe ressort, comme dans le premier mode de réalisation, mais oblique. Cette disposition permet, pour un même effort de poussée, d'obtenir un effort de friction plus important sur le coulisseau 102. L'effort normal exercé sur la surface de frottement est alors équilibré par une force d'appui de la cale 105 sur le premier élément 101 au niveau de la surface d'appui 108.

Enfin, des moyens de liaison sont disposés entre le corps 101 et la cale 105 pour retenir la cale 105 sur le corps 101 tout en provoquant un écartement de la cale par rapport au coulisseau 102 à l'encontre de l'effort de poussée générée par les ressorts hélicoïdaux 107 lorsque la cale 105 est déplacée relativement au corps 101. Les moyens de liaison comportent à cet effet des obstacles en demi-lune 110 qui sont solidaires du corps 101 et qui sont engagés dans des demi-cavités 111 en regard creusées dans la cale 105, les demi-cavités 111 présentant chacune deux pentes.

Le fonctionnement du dispositif est le suivant. Lorsque l'on tente de déplacer le coulisseau 102 par rapport au corps 101, le coulisseau 102 va se déplacer légèrement en entraînant avec lui la cale 105, jusqu'à ce que les obstacles en demi-lune 110 viennent en contact avec l'une des demi-pentes des demi-cavités 111. En augmentant encore l'effort exercé sur le coulisseau 102, les obstacles 110 coopérant avec la demi-pente en regard vont progressivement forcer la cale 105 à s'écarter du coulisseau 102 à l'encontre de la poussée exercée par l'organe ressort 107, jusqu'à ce que la cale 105 soit suffisamment écartée pour ne plus pouvoir retenir le coulisseau 102. Celui-ci se déplace alors par rapport au corps 101, à l'encontre d'un effort de friction résistant exercé par la cale 105. L'effort de friction résistant résulte d'un équilibre trouvé par la cale entre l'action des obstacles 110 tendant à écarter la cale 105 du coulisseau 102 et la poussée des ressorts 107 tendant à plaquer la cale 105 contre le coulisseau 102. Le dispositif fonctionne de cette façon dans les deux sens de déplacement.

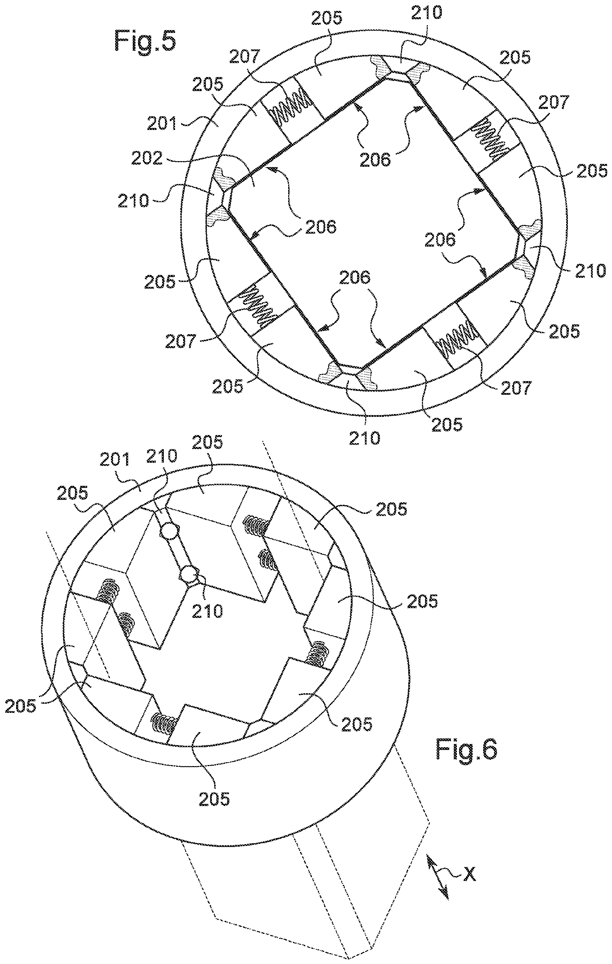

En référence aux figures 5 et 6, et conformément un troisième mode particulier de réalisation de l'invention, le dispositif comporte un premier élément sous la forme d'un manchon 201, dans lequel un deuxième élément, ici une tige 202 à section carrée aux coins tombés, est montée pour coulisser selon une direction de coulissement X, vue en bout sur la figure 5.

L'organe frotteur comporte ici huit patins frotteurs 205 disposés autour de la tige 202. Comme cela est visible à la figure 7, chaque patin frotteur comporte une surface de frottement 206 venant frotter contre l'une des quatre facettes de la tige 202 ainsi qu'une surface d'appui 208 de forme cylindrique circulaire en appui contre la face interne du manchon 201. L'organe presseur prend ici la forme de ressorts hélicoïdaux 207 disposés entre deux patins pour les écarter et ainsi les pousser contre la tige 202 en prenant appui contre la paroi interne du manchon 201. Les patins 205 exercent donc un blocage en coin, mais contrairement au dispositif à coulissement illustré dans le document FR2905997, le blocage ne s'exerce plus dans directement dans la direction de coulissement, mais perpendiculairement à celle-ci.

Le dispositif comporte des moyens de liaison entre le manchon 201 et les patins frotteurs 205, sous la forme de plots coniques 210 saillant de la paroi interne du manchon 205 et engagés dans des demi-cavités 211 comportant des demi-pentes, comme visible à la figure 7.

Le fonctionnement du dispositif est le suivant. Lorsque l'on tente de déplacer la tige 202 par rapport au manchon 201, la tige 202 va se déplacer légèrement en entraînant avec elle les patins frotteurs 205, jusqu'à ce que les obstacles coniques 210 viennent en contact avec l'une des demi-pentes des demi-cavités 211. En augmentant encore l'effort exercé sur la tige 202, les obstacles 210 coopérants avec la demi-pente en regard vont progressivement forcer les patins 205 à s'écarter de la tige 202 à l'encontre de la poussée exercée par les ressorts 207, jusqu'à ce que les patins soient suffisamment écartés pour ne plus pouvoir retenir la tige 202. Celle-ci se déplace alors par rapport au manchon 201, à l'encontre d'un effort de friction résistant exercé par les patins 205. L'effort de friction résistant résulte d'un équilibre trouvé par les patins 205 entre l'action des obstacles coniques 210 tendant à écarter les patins 205 de la tige 202 et la poussée des ressorts 207 tendant à plaquer les patins 205 contre la tige 202.

Bien sûr, on pourra diminuer ou au contraire augmenter le nombre de facettes de la tige. On pourra par exemple prévoir une tige à section triangulaire (trois facettes coopérant avec six patins), ou une tige à section hexagonale (six facettes coopérant avec douze patins).

En référence à la figure 8, et conformément un quatrième mode particulier de réalisation de l'invention, le dispositif comporte un premier élément sous la forme d'un corps 301, dans lequel un deuxième élément, ici un coulisseau 302, est montée pour coulisser selon une direction de coulissement X, vue en bout sur la figure 8.

L'organe frotteur comporte ici deux étriers 305 disposés en regard l'un de l'autre à cheval sur le coulisseau 302. Les étriers 305 comportent des surfaces de frottement 306 venant en contact sur des surfaces de frottement à double pente de part et d'autre du coulisseau 302.

L'organe presseur prend ici la forme de rondelles ressort 307 enfilées sur des tirants 308 s'étendant au travers des étriers 305. Les rondelles ressort 307 sont ainsi disposées pour rappeler les étriers 305 l'un vers l'autre de sorte à enserrer le coulisseau 302.

Le dispositif comporte des moyens de liaison entre le corps 301 et les étriers 305, sous la forme de bielles 310 engagés d'une part dans une demi-cavité en demi-lune creusée dans les flancs du corps 310, pour saillir de ceux-ci et être engagées dans des demi-cavités 311 creusées en diamant dans les étriers 305.

Le fonctionnement du dispositif est le suivant. Lorsque l'on tente de déplacer le coulisseau 302 par rapport au corps 301, le coulisseau 302 va se déplacer légèrement en entraînant avec lui les étriers 305, jusqu'à ce que les billes 310 viennent en contact avec l'une des demi-pentes des demi-cavités 311. En augmentant encore l'effort exercé sur le coulisseau 302, les billes 310 coopérant avec la demi-pente en regard vont progressivement forcer les étriers 305 à s'écarter de du coulisseau 302 à l'encontre de la poussée exercée par les rondelles ressort 307, jusqu'à ce que les étriers soient suffisamment écartés pour ne plus pouvoir retenir le coulisseau 302. Celui-ci se déplace alors par rapport au corps 301, à l'encontre d'un effort de friction résistant exercé par les étriers 305. L'effort de friction résistant résulte d'un équilibre trouvé par les étriers 305 entre l'action des billes 310 tendant à écarter les étriers 305 du coulisseau 302 et la poussée des rondelles ressort 307 tendant à plaquer les étriers 305 contre le coulisseau 302.

Dans les modes de réalisation illustrés, les obstacles (bille, rouleau, demi-lune, cône...) servent aussi bien à retenir l'organe frotteur sur le premier élément qu'à écarter l'organe frotteur du deuxième élément. Il est bien évident que l'organe frotteur n'est pas initialement en contact avec les obstacles des moyens de liaison. En effet, il convient de laisser un jeu, certes minime, mais suffisant pour assurer que la ou les surfaces de frottement de l'organe frotteur soient bien en contact avec le deuxième élément. Ce n'est que lorsque le deuxième élément est déplacé en entraînant initialement l'organe frotteur avec lui que l'organe frotteur vient en contact avec les obstacles des moyens de liaison et finit par être écarté du deuxième élément lorsque l'effort imposé au deuxième élément atteint ou dépasse un effort seuil déterminé par la géométrie de l'ensemble et par la poussée exercée par l'organe ressort.

L'invention n'est pas limitée à ce qui vient d'être décrit, mais englobe au contraire toute variante entre dans le cadre défini par les revendications.

En particulier, bien que les moyens de liaison soit ici des obstacles (bille, rouleau, demi-lune, cône...) agencés pour coopérer avec des parois d'une cavité dans lesquels les obstacles sont engagés pour provoquer un mouvement de l'organe frotteur perpendiculaire à la direction de coulissement afin de décoller l'organe frotteur du deuxième élément, on pourra prévoir tout autre type de moyens de liaison, du moment que ceux-ci provoquent un décollement de l'organe frotteur du deuxième élément lorsque l'organe frotteur se déplace relativement au premier élément. Les moyens de liaison peuvent ainsi comporter des cames qui sont forcées à tourner lors dudit déplacement et qui écartent l'organe frotteur du deuxième élément. Il peut également s'agir de moyens électromagnétiques.

## Revendications

1. Dispositif à friction contrôlée, comportant un premier élément sur lequel un deuxième élément est monté pour coulisser selon une direction de coulissement (X) , et des moyens de retenue à friction disposés pour exercer entre les deux éléments un effort résistant s'opposant au déplacement relatif des deux éléments, les moyens de retenue à friction comportant :
- un organe frotteur (5 ; 105 ; 205 ; 305) monté solidaire du premier élément pour frotter sur le deuxième élément (2 ; 102 ; 202 ; 302) selon une surface de frottement s'étendant parallèlement à la direction de coulissement ;
- un organe presseur (7 ; 107 ; 207 ; 307) pour exercer sur l'organe frotteur un effort de poussée de l'organe frotteur contre le deuxième élément selon une direction normale au déplacement relatif des éléments ;
**caractérisé en ce que** les moyens de retenue comportent des moyens de liaison de l'organe frotteur au premier élément (10, 11 ; 110, 111 ; 210, 211 ; 310, 311) qui provoquent un décollement de l'organe frotteur du deuxième élément lors d'un déplacement du deuxième élément relativement au premier élément, dans les deux sens de déplacement du deuxième élément relativement au premier élément.

2. Dispositif selon la revendication 1, dans lequel les moyens de liaison comportent au moins un obstacle (10 ; 110 ; 210 ; 310) interposé entre le premier élément et l'organe frotteur en étant engagé dans une demi cavité de ce dernier qui présente une paroi (11 ; 111 ; 211 ; 311) conformée pour provoquer un mouvement de l'organe frotteur perpendiculairement à la direction de coulissement pour provoquer un décollement de l'organe frotteur.

3. Dispositif selon la revendication 2, dans lequel la paroi de la demi cavité présente deux pentes sur chacune desquelles l'obstacle vient respectivement appuyer pour décoller l'organe frotteur lors d'un déplacement relatif des deux éléments dans un sens ou dans l'autre.

4. Dispositif selon la revendication 1, dans lequel l'organe frotteur comprend un volet (5) articulé selon un axe d'articulation (Y) parallèle à la direction de coulissement.

5. Dispositif selon la revendication 1, dans lequel l'organe frotteur comprend une cale (105) présentant une surface d'appui (108) contre le premier élément qui fait un angle avec la surface de frottement (106) .

6. Dispositif selon la revendication 1, dans lequel le premier élément a une forme de manchon (201), et le deuxième élément (202) a une forme de tige à facettes sur chacune desquelles des patins (205) de l'organe frotteur vienne frotter.

7. Dispositif selon la revendication 6, dans lequel les patins frotteurs (205) comportent une surface d'appui (206) cylindrique circulaire pour venir en appui contre une surface interne du manchon.

8. Dispositif selon la revendication 6, dans lequel l'organe presseur comporte plusieurs ressorts (207) s'étendant entre deux patins adjacents.

9. Dispositif selon la revendication 1, dans lequel l'organe frotteur comporte deux étriers (305) en regard qui sont rappelés l'un vers l'autre par l'organe presseur (307) pour enserrer le deuxième élément (302).

## Patentansprüche

1. Vorrichtung mit gesteuerter Reibung, umfassend ein erstes Element, an dem ein zweites Element verschiebbar in einer Verschiebungsrichtung (X) gelagert ist, sowie Reibungsrückhaltemittel, die angeordnet sind, um zwischen den beiden Elementen eine Widerstandskraft auszuüben, die sich der Relativverschiebung der beiden Elemente widersetzt, wobei die Reibungsrückhaltemittel umfassen:
- ein Reibelement (5; 105; 205; 305), das fest mit dem ersten Element verbunden ist, um an dem zweiten Element (2; 102; 202; 302) mittels einer Reiboberfläche zu reiben, die sich parallel zur Verschiebungsrichtung erstreckt;
- ein Presselement (7; 107; 207; 307), um auf das Reibelement eine Schubkraft zum Schieben des Reibelements gegen das zweite Element in einer Richtung senkrecht zur Relativverschiebung der beiden Elemente auszuüben;
**dadurch gekennzeichnet, dass** die Rückhaltemittel Verbindungsmittel zum Verbinden des Reibelements mit dem ersten Element (10, 11; 110, 111; 210, 211; 310, 311) umfassen, die ein Lösen des Reibelements von dem zweiten Element während einer Verschiebung des zweiten Elements relativ zum ersten Element in beide Verschiebungsrichtungen des zweiten Elements relativ zum ersten Element bewirken.

2. Vorrichtung nach Anspruch 1, bei der die Verbindungsmittel mindestens ein Hindernis (10; 110; 210; 310) umfassen, das zwischen dem ersten Element und dem Reibelement angeordnet ist, indem es in einen Halbhohlraum dieses letztgenannten eingreift, der eine Wand (11; 111; 211; 311) aufweist, die so geformt ist, dass sie eine Bewegung des Reibelements senkrecht zur Verschiebungsrichtung verursacht, um ein Lösen des Reibelements zu bewirken.

3. Vorrichtung nach Anspruch 2, bei der die Wand des Halbhohlraums zwei Steigungen aufweist, an denen das Hindernis jeweils zur Anlage kommt, um das Reibelement während einer Relativverschiebung der beiden Elemente in die eine oder die andere Richtung zu lösen.

4. Vorrichtung nach Anspruch 1, bei der das Reibelement eine Klappe (5) umfasst, die um eine Gelenkverbindungsachse (Y) angelenkt ist, die parallel zur Verschiebungsrichtung ist.

5. Vorrichtung nach Anspruch 1, bei der das Reibelement einen Keil (105) umfasst, der eine Anlagefläche (108) zur Anlage an dem ersten Element aufweist, die einen Winkel mit der Reibfläche (106) bildet.

6. Vorrichtung nach Anspruch 1, bei der das erste Element eine Hülsenform (201) und das zweite Element (202) eine Form einer Stange mit Facetten hat, an denen jeweils Schuhe (205) des Reibelements reiben.

7. Vorrichtung nach Anspruch 6, bei der die Reibschuhe (205) eine kreisförmige zylindrische Anlagefläche (206) umfassen, um an einer Innenfläche der Hülse in Anlage zu kommen.

8. Vorrichtung nach Anspruch 6, bei der das Presselement mehrere Federn (207) umfasst, die sich zwischen zwei angrenzenden Schuhen erstrecken.

9. Vorrichtung nach Anspruch 1, bei der das Reibelement zwei gegenüberliegende Bügel (305) umfasst, die durch das Presselement zueinander rückgestellt sind, um das zweite Element (302) einzuspannen.

## Claims

1. A controlled-friction device comprising a first element having a second element mounted thereon to slide in a sliding direction (X), and friction retaining means arranged to exert between the two elements an opposing force against relative movement of the two elements, the friction retaining means comprising:
· a friction member (5; 105; 205; 305) mounted securely to the first element to rub against the second element (2; 102; 202; 302) via a friction surface extending parallel to the sliding direction; and
· a presser member (7; 107; 207; 307) for exerting a thrust force on the friction member, urging the friction member against the second element in a direction normal to the relative movement of the elements;
the device being **characterized in that** the retaining means comprise link means linking the friction member to the first element (10, 11; 110, 111; 210, 211; 310, 311) causing the friction member to separate from the second element during movement of the second element relative to the first element in both direction of the movement of the second element relating to the first element.

2. A device according to claim 1, wherein the link means include at least one obstacle (10; 110; 210; 310) interposed between the first element and the friction element, being engaged in a half-cavity therein, which half-cavity presents a wall (11; 111; 211; 311) shaped to cause the friction member to move perpendicularly to the sliding direction in order to cause separation of the friction member.

3. A device according to claim 2, wherein the wall of the half-cavity presents two slopes, against each of which the obstacle comes to bear to separate the friction member during relative movement between the two elements, respectively in one direction or the other direction.

4. A device according to claim 1, wherein the friction member comprises a flap (5) hinged about a hinge axis (Y) parallel to the sliding direction.

5. A device according to claim 1, wherein the friction member comprises a wedge (105) presenting a bearing surface (108) bearing against the first element and forming an angle relative to the friction surface (106).

6. A device according to claim 1, wherein the first element is in the form of a sleeve (201), and the second element (202) is in the form of a rod having facets, each of which has pads (205) of the friction member rubbing thereagainst.

7. A device according to claim 6, wherein the friction pads (205) include circularly cylindrical bearing surfaces (206) for bearing against an inside surface of the sleeve.

8. A device according to claim 6, wherein the presser member comprises a plurality of springs (207) extending between two adjacent pads.

9. A device according to claim 1, wherein the friction member comprises two bridges (305) facing each other and urged towards each other by the presser member (307) in order to clamp onto the second element (302).
